# EUROPÄISCHE PATENTSCHRIFT

(11) **EP 2 454 137 B1**
(45) Veröffentlichungstag und Bekanntmachung des Hinweises auf die Patenterteilung: **09.09.2015**
(21) Anmeldenummer: 10734123.2
(22) Anmeldetag: 19.07.2010
(51) Int. Cl.: G01B 11/06, B60W 40/06, B60R 16/02, G01N 21/21, G08B 19/02, B60W 40/068, G01N 21/47

(54) **LASERBASIERTES VERFAHREN ZUR REIBWERTKLASSIFIKATION IN KRAFTFAHRZEUGEN**
LASER-BASED METHOD FOR THE FRICTION COEFFICIENT CLASSIFICATION OF MOTOR VEHICLES
PROCÉDÉ À LASER PERMETTANT LA CLASSIFICATION DE COEFFICIENTS DE FROTTEMENT DANS DES VÉHICULES AUTOMOBILES

(30) Priorität: 17.07.2009 DE 102009033745
(43) Veröffentlichungstag der Anmeldung: 23.05.2012
(73) Patentinhaber: Continental Teves AG & Co. oHG, 60488 Frankfurt (DE); Continental Engineering Services GmbH, 60489 Frankfurt (DE)
(72) Erfinder: GROITZSCH, Stephan, 69469 Weinheim (DE); SCHORN, Matthias, 64367 Maintal (DE); FISCHER, Daniel, 65824 Schwalbach (DE); STÖLZL, Stephan, 69469 Weinheim (DE)
(86) Internationale Anmeldenummer: PCT/EP2010/060416
(87) Internationale Veröffentlichungsnummer: WO 2011/007015

(56) Entgegenhaltungen:
- DE-A1- 10 011 219
- DE-A1- 19 824 625
- FR-A1- 2 897 950
- JP-A- 10 096 694
- JP-A- 2005 043 240
- US-A- 6 166 645
- US-A1- 2009 099 736

## Beschreibung

Die Erfindung betrifft eine Sensoranordnung gemäß Oberbegriff von Anspruch 1 sowie ein Verfahren gemäß Oberbegriff von Anspruch 10.

Moderne elektronische Fahrerassistenz- und Fahrdynamiksysteme sind häufig darauf angewiesen, auf eine Information über den Kraftschlussbeiwert zwischen Fahrbahn und Reifen zuzugreifen oder zumindest Annahmen zu treffen. Beispielhaft sei ein Fahrerassistenzsystem zur Vermeidung von Unfällen genannt. Bei einem solchen System ist es von großer Bedeutung, den Kraftschlussbeiwert zu kennen und bei der Bereichnung von Warn- und Eingriffszeitpunkten zu berücksichtigen. Wird der Kraftschlussbeiwert als zu niedrig angenommen, würde das System zu früh warnen bzw. eingreifen, und auf diese Weise den Fahrer bevormunden. Entsprechend ausgelegte Systeme würden von Fahrern nur schwerlich akzeptiert werden. Wird der Kraftschlussbeiwert zu hoch angenommen, warnt bzw. greift das System zu spät ein, so dass beispielsweise eine Kollision möglicherweise nicht mehr verhindert werden kann.

Neben dem genannten Beispiel gibt es zahlreiche weitere Fahrerassistenz- und Fahrdymamiksysteme, deren Systemverhalten sich durch eine Information über den Kraftschlussbeiwert verbessern ließe. Des Weiteren kann der Fahrer über einen schlechten Fahrbahn-Reifen-Kontakt informiert werden, um seine Fahrweise dementsprechend anpassen zu können.

Folgende Ansätze werden derzeit in Elektronischen Bremssystemen eingesetzt, um den Kraftschlussbeiwert vorzugeben bzw. zu ermitteln:
- Annahme eines festen Wertes für den Kraftschlussbeiwert
- Indirekte Bestimmung des Kraftschlussbeiwertes mittels mathematischer Verfahren aus anderen im Fahrzeug (direkt) gemessenen Größen. Bei der Schätzung des Kraftschlussbeiwertes können beispielsweise nichtlineare Zustandsschätzer oder Kalman-Filter zum Einsatz kommen.

Die erstgenannte Vorgehensweise durch Annahme eines festen Kraftschlussbeiwertes kommt bei einigen Systemen zur Anwendung, unter anderem bei Fahrerassistenzsystemen zur Vermeidung von Unfällen. In der Regel wird beispielsweise bei den Berechnungen der Warn- und/oder Eingriffszeitpunkte ein idealer Kraftschluss zwischen Reifen und Fahrbahn angenommen. Dies kann dazu führen, dass bei niedrigem Kraftschlussbeiwert zu spät gewarnt/eingegriffen wird - eine Kollision kann nicht verhindert werden.

Das als zweites genannte Verfahren findet beispielsweise bei Fahrdynamikregelungen Anwendung. Hierbei wird auf Basis direkt gemessener Fährzeuggrößen eine Abschätzung des ausgenutzten Kraftschlussbeiwertes durchgeführt. Sofern dynamische Fahrsituationen vorliegen, lassen sich verhältnismäßig gute Ergebnisse erzielen. Befindet sich das Fahrzeug aber in einer Fahrsituation mit lediglich geringen Beschleunigungen, so führen diese Ansätze nicht mehr unbedingt zu dem gewünschten Erfolg, da der ausgenutzte Kraftschlussbeiwert in diesem Fall erheblich kleiner ist, als der reale.

Aus der Druckschrift DE 198 24 625 A1 ist eine Vorrichtung zur Detektion des Zustandes von Oberflächen mit optischer Abtastung bekannt. Diese weist Mittel auf, mit denen die Oberfläche mit einem schräg auftreffenden Lichtbündel bestrahlt wird und das rückgestreute Licht mittels Streulichtanalyse ausgewertet wird. Dabei wird der meteorologisch bedingte Zustand der Oberfläche, insbesondere Vereisung, Glätte und Feuchtigkeit bestimmt.

Die Erfindung hat sich die Aufgabe gestellt, eine Sensoranordnung und ein Verfahren vorzuschlagen, mit welchem eine relativ präzise Ermittlung einer Reibwert-Information der Fahrbahnoberfläche ermöglicht wird, insbesondere auch in gleichförmigen Fahrzuständen des Kraftfahrzeugs.

Diese Aufgabe wird erfindungsgemäß gelöst durch die Sensoranordnung gemäß Anspruch 1 sowie durch das Verfahren gemäß Anspruch 10.

Unter der Reibwert-Information wird vorzugsweise ein Kraftschlussbeiwert verstanden.

Es ist bevorzugt, dass die elektronische Auswerteschaltung so ausgelegt ist, dass sie die Intensitätswerte oder davon abhängige Größen, welche bei Erfassung der reflektierten und/oder gestreuten Strahlung durch die wenigstens eine Strahlungsemittereinheit und/oder die eine oder mehreren zusätzlichen Sensoreinheiten bereitgestellt werden, in einer Klassifikatoreinheit klassifiziert, wobei die Klassifikatoreinheit die Reibwert-Information, als Reibwert oder Reibwerttyp oder ein Reibwertintervall, berechnet und insbesondere wenigstens eine Güte-Information bereitstellt, welche eine Information über die Aussagekraft und/oder die Zuverlässigkeit der Reibwert-Information beinhaltet.

Die Klassifikatoreinheit der elektronischen Auswerteschaltung ist zweckmäßigerweise so ausgelegt, dass sie eine Frequenzanalyse der Strahlungserfassungs-Ausgangssignale der zumindest einen Strahlungsemittereinheit und/oder der einen oder mehreren zusätzlichen Sensoreinheiten durchführt und insbesondere nach der Frequenzanalyse ein Energieverteilungsmuster bezogen auf einen oder mehrere definierte Frequenzbereiche und/oder bezogen auf Energieniveaus in definierten Frequenzbändern erkennt und/oder erfasst und diesem Energieverteilungsmuster unter Berücksichtigung von Referenzkriterien und/oder Referenzenergieverteilungsmustern die Reibwert-Information zuordnet.

Unter den Strahlungserfassungs-Ausgangssignalen werden vorzugsweise die Ausgangssignale der wenigstens einen Strahlungsemittereinheit und/oder der einen oder der mehreren zusätzlichen Sensoreinheiten verstanden, die von der erfassten reflektierten und/oder gestreuten Strahlung abhängen bzw. diese codieren bzw. die entsprechend erfasste Intensität dieser Strahlung 'codieren. Die Strahlungserfassungs-Ausgangssignale sind insbesondere digitale Signale bzw. Wertefolgen.

Die Klassifikatoreinheit der elektronischen Auswerteschaltung ist zweckmäßigerweise so ausgelegt, dass sie in Abhängigkeit der Varianz und/oder der Standardabweichung, insbesondere mittels einer Fuzzylogik gewichtet, der Strahlungserfassungs-Ausgangssignale der zumindest einen Strahlungsemittereinheit und/oder der einen oder der mehreren zusätzlichen Sensoreinheiten die Güte-Information bestimmt.

Die Klassifikatoreinheit der elektronischen Auswerteschaltung ist vorzugsweise so ausgelegt, dass sie zur Bestimmung der Güte-Information weitere Parameter zur Plausibilisierung der Reibwert-Information, wie beispielsweise bzw. zumindest einen der folgenden Parameter; eine Temperaturinformation und/oder eine Regensensorinformation und/oder eine Zeit-/Datumsinformation, berücksichtigt.

Alternativ vorzugsweise weist die Sensoranordnung mehrere Strahlungsemittereinheiten in einer gemeinsamen Clustereinheit integriert auf, wobei diese Strahlungsemittereinheiten jeweils auf verschiedene Punkte der Fahrbahnoberfläche gerichtet sind.

Es ist bevorzugt, dass die eine oder die mehreren Strahlungsemittereinheiten, ein bzw. jeweils ein Laserelement umfassen, welches die Strahlung emittiert, und insbesondere ein Photoelement, welches die reflektierte und/oder gestreute Strahlung erfasst.

Es ist zweckmäßig, dass das Photoelement als Photodiode ausgebildet ist und insbesondere die eine oder die mehreren Strahlungsemittereinheiten oder jede Strahlüngsemittereinheit als Vertikal-Kavitäts-Oberflächenemittierender-Laser, "Vertical Cavity Surface Emitting Laser" mit integrierter Photodiode ausgebildet ist.

Alternativ vorzugsweise umfasst eine oder mehrere der Strahllungsemittereinheiten ein bzw. jeweils ein Laserelement, dass die Strahlung sowohl emittiert als auch sensiert bzw. erfasst, insbesondere durch Überlagerung im Laser. Dazu weist die Strahlungsemittereinheit besonders bevorzugt kein zusätzliches Sensorelement auf.

Die Sensoranordnung ist vorzugsweise so ausgebildet, dass sie zusätzlich aus der an der Fahrbahnoberfläche reflektierten Strahlung zumindest eine Geschwindigkeit, insbesondere die Fahrzeuglängsgeschwindigkeit, des Kraftfahrzeugs relativ zur Fahrbahnoberfläche ermittelt und/oder den Abstand des Fahrzeugchassis zur Fahrbahnoberfläche ermittelt, besonders bevorzugt wird hierzu dieselbe Strahlungsemittereinheit und dieselbe elektronische Auswerteschaltung verwendet. Ganz besonders bevorzugt ist die Sensoranordnung sowohl zur Erfassung einer Fahrzeuggeschwindigkeit sowie des Abstands des Fahrzeugchassis zur Fahrbahnoberfläche ausgebildet, wobei jeweils zwischen diesen Erfassungen umgeschaltet wird.

Die elektronische Auswerteschaltung ist bevorzugt zur Bestimmung der Reibwert-Information und/oder der Güte-Information mit einer zentralen elektronischen Kontrolleinheit, insbesondere eines Kraftfahrzeugregelungssystems bzw. Kraftfahrzeugbremssystems, verbunden.

Die Klassifikatoreinheit umfasst eingangsseitig bevorzugt einen Tiefpass.

Die Sensoranordnung erfasst vorzugsweise die reflektierte und die gestreute Strahlung im Wesentlichen in separaten Einheiten, insbesondere in Strahlungsemittereinheiten und zusätzlichen Sensoreinheiten, die hierzu in Bezug zu einer Fahrbahnoberflächenparallelen zueinander versetzt bzw. beabstandet angeordnet sind.

Die Klassifikatoreinheit ist zweckmäßigerweise so ausgebildet, dass sie im Wesentlichen die Strahlungserfassungs-Ausgangssignale der Einheiten, die vornehmlich die reflektierte Strahlung erfassen und dabei besonders bevorzugt dieselbe Einheit ist bzw. dieselben Einheiten sind, welche die Strahlung emittiert/emittieren, oder in direkter Nähe der emittierenden Einheit/en angeordnet sind, und der Einheiten, die vornehmlich die gestreute Strahlung erfassen und dabei besonders bevorzugt in einem definierten Abstand zur emittierenden Einheit bzw. den emittieren Einheiten angeordnet sind, separat verarbeitet, zumindest separat vorverarbeitet, wonach gemeinsam die Reibwert-Information und/öder die Güte-Information ermittelt wird.

Die zumindest eine Strahlungsemittereinheit ist vorzugsweise als Laser ausgebildet, welcher monochromes, kontinuierliches, infrarotes Laserlicht emittiert.

Die vorliegende Erfindung beschreibt vorzugsweise eine beispielhafte Sensoranordnung und ein beispielhaftes Verfahren, mit deren Hilfe sich die Schätzung des Kraftschlussbeiwertes verbessern lässt, so dass sich auch in nicht-dynamischen Fahrsituationen eine zuverlässige und robuste Klassifikation des Kraftschlusses zwischen Fahrbahn und Reifen durchführen lässt. Das genannte Verfahren kann zur Bestimmung des Kraftschlussbeiwertes zwischen Reifen und Fahrbahn bzw. zur Abschätzung einer Kraftschlussbeiwertklasse basierend auf den Reflektions- und Absorptionseigenschaften der Beschaffenheit der Fahrbahnoberfläche in Verbindung mit einem Zwischenmedium (z.B. Wasser) angewandt werden. Zur Erlangung einer höheren Robustheit können bereits existierende Schätz- und/oder Messverfahren durch die genannte Eingangsinformation ergänzt werden.

Als spezielle Ausgestaltungsform ist die Sensoranordnung bevorzugt so ausgebildet bzw. die mindestens eine Strahlungsemittereinheit so angeordnet und ausgerichtet, dass die Fahrbahnoberfläche vor dem Fahrzeug abgetastet wird, um somit eine Vorausschau auf den kommenden Kraftschlussbeiwert zu erhalten. Auf diese Weise kann auf sich ändernde Kraftschlussbeiwerte besser reagiert werden.

Zweckmäßigerweise ist die wenigstens eine Strahlungsemittereinheit sowohl Emitter als auch Empfänger bzw. Sensor. In diesem Fall ergibt sich durch die relative Bewegung zwischen Emitter und Fahrbahnoberfläche in Strahlrichtung eine Frequenzverschiebung des reflektierten Lichts, die auch als "Doppler-Effekt" bekannt ist. Dieses Messverfahren zeichnet sich dadurch aus, dass der Laseremitter gleichzeitig als Messzelle verwendet wird und dort ausgesendete und empfangene Photonen interferieren ("self-mixing"). Beispielsweise mittels Frequenzanalyse wird aus dem Interferenzsignal die Differenzfrequenz zwischen emittierten und reflektierten Photonen ermittelt. Aus der Amplitude der im Spektrum vorhandenen Frequenzen kann eine Aussage über die Reflektivität des Untergrunds abgeleitet werden. Ein solches "self-mixing" Lasersystem ist beispielsweise ein Vertikal-Kavitäts-Oberflächenemittierender-Laser.

Die Vorteile des beispielhaft vorgeschlagenen Verfahrens und der beispielhaften Sensoranordnung gegenüber anderen optischen Verfahren sind beispielsweise:
- Das verwendete IR-Licht ist für Menschen nicht sichtbar und kann damit andere Verkehrsteilnehmer nicht stören.
- Ausgesendete und reflektierte Photonen stehen in einer exakten Phasenbeziehung zueinander (kohärentes Laserlicht), wodurch andere Quellen, selbst die mit der gleichen Frequenz, von der Messzelle nicht erfasst werden.
- Die beschriebene Technologie ist inzwischen hochintegriert verfügbar, was eine kostengünstige Realisierung und eine leichte Integration in das Fahrzeug ermöglicht.
- Die Tatsache, dass Sende- und Messeinheit in einem Bauteil integriert sind, reduziert die Kosten und erhöht die Präzision.
- Die vom Laser abgestrahlte Leistung kann bei dieser Technologie so niedrig gewählt werden, dass auch bei direkter Einstrahlung in das menschliche Auge (z.B. Mechaniker) keine Schäden entstehen.
- Der geringe Strahldurchmesser des fokussierten Lasers erfordert nur kleine "Austrittsfenster", wodurch sich das System leicht vor Verschmutzung schützen läst.
- Durch die kostengünstige, miniaturisierte Bauweise der VCSEL lassen sich in einem Bauteil mehrere Laser integrieren, wodurch mehrere und/oder redundant Messrichtungen erfasst werden können.

Über die erfindungsgemäße, geeignete geometrische Anordnung mehrerer Laser kann die Rückstreuung bzw. Reflektion unter verschiedenen Einstrahlwinkeln erfasst werden. Hierdurch kann ein Rückstreuungsprofil in Abhängigkeit des Einstrahlwinkels erzeugt werden, welches charakteristisch für die Beschaffenheit einer jeden Fahrbahnoberfläche ist. Während beispielsweise bei rauen Oberflächen ein nahezu homogenes Rückstrahlungsprofil (ähnliche Rückstreuung unter allen Winkeln) zu erwarten ist, zeigt sich bei glatten Oberflächen bei spitzen Auftreffwinkeln eine geringere Rückstreuung als bei stumpfen (idealer Spiegel: Rückstreuung bzw. Reflexion nur bei senkrechtem Auftreffen von Laserstrahl auf Fahrbahn).

Auf Basis der unterschiedlich starken Rückstreuungen unter den Einfallwinkeln, unter den gemessen wird, ist beispielhaft eine Bestimmung der vorherrschenden Kombination von Reflexivität/Rauhigkeit des Untergrundes und des sich auf der Fahrbahn befindenden Zwischenmediums möglich. Mit Hilfe dieser Informationen kann ein Rückschluss auf den bei Verwendung üblicher Luftgummireifen vorherrschenden Kraftschluss zwischen Fahrbahn und Reifen gezogen werden.

Weitere Möglichkeiten/ bevorzugte Verfahrensschritte zur Signalauswertung sind:
- Frequenzanalyse des Amplitudensignals: Es steht zu erwarten, dass verschiedene Untergründe verschiedene Reflexionsmuster aufweisen, die sich im Spektrum niederschlagen.
- Standardabweichung des Amplitudensignals: Es steht zu erwarten, dass verschiedene Untergründe verschiedene Standardabweichungen aufweisen.
- Verwendung von Filtern mit bestimmten Frequenzverlauf: Es steht zu erwarten, dass charakteristische Information zum Reibwert in einem bestimmten Frequenzbereich vorliegt, der gezielt aus dem Amplitudensignal extrahiert wird.
- Das Entfernungssignal eines Sensors gibt Auskunft über die Rauhigkeit der Fahrbahn. Raue Fahrbahnen haben unterschiedliche Reibwerte, bzw. könnte dies ein Indiz für losen Schnee oder Schotter sein.
- Das Amplitudensignal kann auch relativ verwendet werden: Ist aus einem anderen System zur Reibwertschätzung der aktuelle Reibwert bekannt, und das Amplitudensignal weist einen Sprung auf, so kann auf einen schnellen Reibwertsprung geschlossen werden.

Es ist zweckmäßig, dass die Sensoranordnung mindestens einen CV-Sensor (Closing Velocity Sensor) zur Fahrbahnoberflächenerfassung aufweist. Unter einem CV-Sensor wird insbesondere ein Sensor verstanden, der sonst zur Abstandmessung zwischen Fahrzeugen in einem Fahrzeug montiert, verwendet wird. Weitere bevorzugte Ausführungsformen ergeben sich aus den nachfolgenden Beschreibungen von Ausführungsbeispielen an Hand von Figuren.

Es zeigen in schematischer, beispielhafter Darstellung
- Fig. 1: eine Sensoranordnung mit drei Lasersensoren Laser 1 -3, als Strahlungsemittereinheiten,
- Fig. 2: eine Sensoranordnung umfassend eine Clustereinheit bzw. ein Lasersensorcluster,
- Fig. 3: Signalverarbeitung bzw. Verfahrensablaufdiagramm zur Reibwertklassifizierung mit einem optischen Sensor,
- Fig. 4: Klassifizierung von verschiedenen Fahrbahnoberflächen mit einem CV-Sensor (Closing Velocity Sensor), und
- Fig. 5: einen beispielhaften Signalverlauf der Reibwertklassifizierung mit einer beispielhaften Sensoranordnung, beispielgemäß mit einem CV-Sensor.

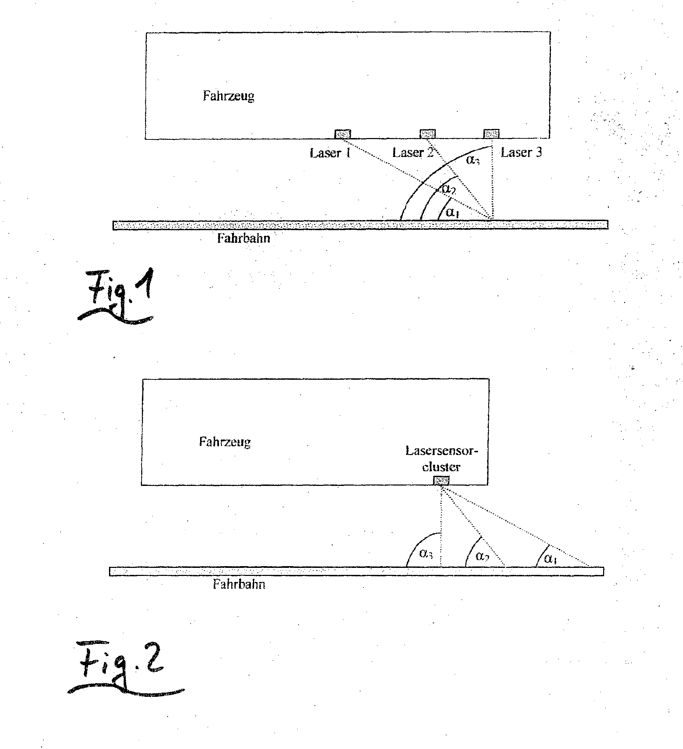

Beispielgemäß sollten alle Laser-Strahlen bzw. die Laser-strahlen der Laser 1 -3 sich in einem Punkt auf den Untergrund treffen wie in Fig. 1 dargestellt, um das Rückstreuungsprofil in exakt diesem Punkt zu erhalten. In einer alternativen, beispielhaften Ausführungsform wird ein Lasersensorcluster (Gehäuse) mit mehreren Laseremittern und - sensoren verwendet, bei dem die unterschiedlichen Laserstrahlen von (annährend) einem Punkt abgestrahlt werden, wie anhand der Fig. 2 veranschaulicht, aufgrund der unterschiedlichen Winkel allerdings nicht in einem Punkt auf der Fahrbahn auftreffen. Unter der Annahme, dass die Fahrbahnbeschaffenheit homogen sei, können entsprechende Effekte vernachlässigt werden.

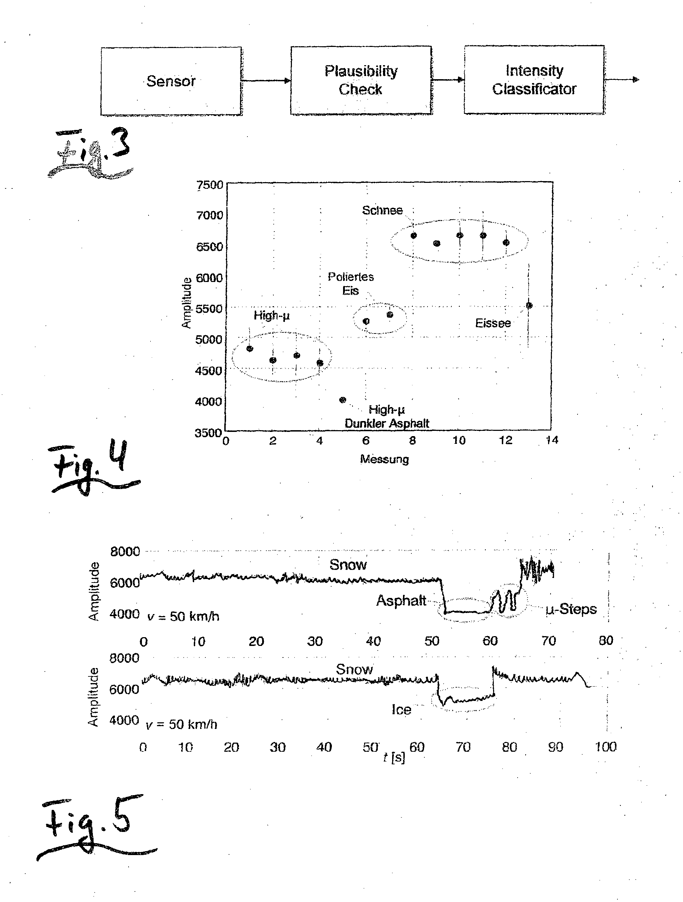

Die Signalauswertung eines Systems zur Reibwertschätzung ist beispielhaft Fig. 3 dargestellt, wobei die Funktionsblöcke Plausibility Check und Intensity Classificator der Klassifikatoreinheit der elektronischen Auswerteschaltung angehören bzw. Teil dieser Schaltung sind. Zunächst findet eine Plausibilisierung statt. Hierbei wird sichergestellt, dass nur Messwerte verwendet werden, bei denen tatsächlich die Fahrbahn vermessen wird. Erfasst der Sensor beispielsweise die Geschwindigkeit, so ist zu überprüfen, dass die gemessene Geschwindigkeit im gleichen Bereich liegt wie die Geschwindigkeit, die beispielsweise von Raddrehzahlsensoren gemessen wird. Erfasst der Sensor beispielsweise den Abstand, so ist zu überprüfen, dass der gemessene Abstand im Bereich des typischen Abstands Sensor-Fahrbahn liegt.

Im zweiten Schritt wird aus dem plausibilisierten Signal die Fahrbahnsituation und somit indirekt der Reibwert klassifiziert. Das Hauptmerkmal stellt dabei die Amplitude dar. Wie in Fig. 4 dargstellt, lassen sich Amplitudenbereiche verschiedenen Fahrbahnbeschaffenheiten zuordnen. Diese Zuordnung könnte beispielsweise durch ein Fuzzy-Logik-Modul erfolgen. Jedem Amplitudenbereich ist dabei ein Reibwert zugeordnet, der in den Bereichübergängen anteilig gewichtet wird.

Zur Beschreibung des Effektes wurden zunächst die in Fig. 4 angegebenen Fahrbahnoberflächen vermessen. Die Punkte stellen jeweils den Mittelwert und die Fehlerbalken die Standardabweichung einer Messung dar, wobei Messungen 1-4 und 13 längere Fahrten á 20 Minauten darstellen. Es ist eine deutliche Unterscheidbarkeit der verschiedenen Fahrbahnen zu erkennen.

Fig. 5 zeigt den zeitlichen Verlauf des Signals bzw. des Ausgangssignals des CV-Sensors. Auch hier ist eine deutliche und zudem sehr schnelle Erkennung der verschiedenen Untergründe zu erkennen. Insbesondere kann in der oberen Darstellung selbst ein mehrfacher *µ*-Sprung erkannt werden, wobei die Asphaltflächen nur ca. 5m lang waren.

## Patentansprüche

1. Sensoranordnung zur Erfassung des Reibwerts einer Fahrbahnoberfläche, wobei die Sensoranordnung an einem Kraftfahrzeug angeordnet ist und zumindest eine Strahlungsemittereinheit (1, 2, 3) und wenigstens eine elektronische Auswerteschaltung umfasst, wobei die Strahlungsemittereinheit (1, 2, 3) elektromagnetische Strahlung zur Fahrbahnoberfläche hin emittiert und die Strahlung an der Fahrbahnoberfläche zumindest teilweise reflektiert und/oder gestreut wird und die reflektierte und/oder gestreute Strahlung zumindest teilweise in der Strahlungsemittereinheit (1, 2, 3) und/oder in einer oder mehreren zusätzlichen Sensoreinheiten erfasst wird, wobei
die elektronische Auswerteschaltung so ausgelegt ist, dass sie aus der Intensität der reflektierten und/oder gestreuten Strahlung oder einer davon abhängigen Größe, eine Reibwert-Information der Fahrbahnoberfläche ermittelt, **dadurch gekennzeichnet, dass**
die Sensoranordnung mehrere Strahlungsemittereinheiten (1, 2, 3) aufweist, welche von einander um einen definierten Weg beabstandet, bezogen auf eine Parallele zur Fahrbahnoberfläche, im Fahrzeug angeordnet sind, wobei diese Strahlungsemittereinheiten (1, 2, 3) alle im Wesentlichen auf einen gemeinsamen Punkt oder auf ein gemeinsames Zielgebiet der Fahrbahnoberfläche gerichtet sind,
wobei
mittels einer geometrische Anordnung mehrerer Laser (1, 2, 3), als Strahlungsemittereinheiten, die Rückstreuung und/oder Reflektion unter verschiedenen Einstrahlwinkeln (α₁, α₂, α₃) erfasst wird.

2. Sensoranordnung nach Anspruch 1, **dadurch gekennzeichnet, dass** die elektronische Auswerteschaltung so ausgelegt ist, dass sie die Intensitätswerte oder davon abhängige Größen, welche bei Erfassung der reflektierten und/oder gestreuten Strahlung durch die wenigstens eine Strahlungsemittereinheit (1, 2, 3) und/oder die eine oder mehreren zusätzlichen Sensoreinheiten bereitgestellt werden, in einer Klassifikatoreinheit klassifiziert, wobei die Klassifikatoreinheit die Reibwert-Information, als Reibwert oder Reibwerttyp oder ein Reibwertintervall, berechnet und insbesondere wenigstens eine Güte-Information bereitstellt, welche eine Information über die Aussagekraft und/oder die Zuverlässigkeit der Reibwert-Information beinhaltet.

3. Sensoranordnung nach Anspruch 2, **dadurch gekennzeichnet, dass** die Klassifikatoreinheit der elektronischen Auswerteschaltung so ausgelegt ist, dass sie eine Frequenzanalyse der Strahlungserfassungs-Ausgangssignale der zumindest einen Strahlungsemittereinheit (1, 2, 3) und/oder der einen oder mehreren zusätzlichen Sensoreinheiten durchführt und insbesondere nach der Frequenzanalyse ein Energieverteilungsmuster bezogen auf einen definierten Frequenzbereich und/oder bezogen auf Energieniveaus in definierten Frequenzbändern erkennt und/oder erfasst und diesem Energieverteilungsmuster unter Berücksichtigung von Referenzkriterien und/oder Referenzenergieverteilungsmustern die Reibwert-Information zuordnet.

4. Sensoranordnung nach Anspruch 2 oder 3, **dadurch gekennzeichnet, dass** die Klassifikatoreinheit der elektronischen Auswerteschaltung so ausgelegt ist, dass sie in Abhängigkeit der Varianz und/oder der Standardabweichung, insbesondere mittels einer Fuzzylogik gewichtet, der Strahlungserfassungs-Ausgangssignale der zumindest einen Strahlungsemittereinheit (1, 2, 3) und/oder der einen oder mehreren zusätzlichen Sensoreinheiten die Güte-Information bestimmt.

5. Sensoranordnung nach mindestens einem der Ansprüche 2 bis 4, **dadurch gekennzeichnet, dass** die Klassifikatoreinheit der elektronischen Auswerteschaltung so ausgelegt ist, dass sie zur Bestimmung der Güte-Information weitere Parameter zur Plausibilisierung der Reibwert-Information, wie beispielsweise eine Temperaturinformation und/oder eine Regensensorinformation und/oder eine Zeit-/Datumsinformation, berücksichtigt.

6. Sensoranordnung nach mindestens einem der Ansprüche 1 bis 5, **dadurch gekennzeichnet, dass** die Sensoranordnung mehrere Strahlungsemittereinheiten (1, 2, 3) in einer gemeinsamen Clustereinheit integriert aufweist, wobei diese Strahlungsemittereinheiten (1, 2, 3) jeweils auf verschiedene Punkte der Fahrbahnoberfläche gerichtet sind.

7. Sensoranordnung nach mindestens einem der Ansprüche 1 bis 6, **dadurch gekennzeichnet, dass** die eine oder die mehreren Strahlungsemittereinheiten (1, 2, 3), ein Laserelement umfassen, welches die Strahlung emittiert, und insbesondere ein Photoelement, welches die reflektierte und/oder gestreute Strahlung erfasst.

8. Sensoranordnung nach Anspruch 7, **dadurch gekennzeichnet, dass** das Photoelement als Photodiode ausgebildet ist und insbesondere die eine oder die mehreren Strahlungsemittereinheiten (1, 2, 3) oder jede Strahlungsemittereinheit (1, 2, 3) als Vertikal-Kavitäts-Oberflächenemittierender-Laser, "Vertical Cavity Surface Emitting Laser" mit integrierter Photodiode ausgebildet ist.

9. Sensoranordnung nach mindestens einem der Ansprüche 1 bis 8, **dadurch gekennzeichnet, dass** die Sensoranordnung so ausgebildet ist, dass sie zusätzlich aus der an der Fahrbahnoberfläche reflektierten Strahlung zumindest eine Geschwindigkeit des Kraftfahrzeugs relativ zur Fahrbahnoberfläche ermittelt, insbesondere wird hierzu dieselbe Strahlungsemittereinheit (1, 2, 3) und dieselbe elektronische Auswerteschaltung verwendet.

10. Verfahren zur Reibwertklassifikation in Kraftfahrzeugen mit einer Sensoranordnung, insbesondere einer Sensoranordnung gemäß mindestens einem der Ansprüche 1 bis 9, wobei die Sensoranordnung an einem Kraftfahrzeug angeordnet ist und zumindest eine Strahlungsemittereinheit (1, 2, 3) und wenigstens eine elektronische Auswerteschaltung umfasst, wobei die Strahlungsemittereinheit (1, 2, 3) elektromagnetische Strahlung zur Fahrbahnoberfläche hin emittiert und die Strahlung an der Fahrbahnoberfläche zumindest teilweise reflektiert und/oder gestreut wird und die reflektierte und/oder gestreute Strahlung zumindest teilweise in der Strahlungsemittereinheit (1, 2, 3) und/oder in einer oder mehreren zusätzlichen Sensoreinheiten erfasst wird, wonach
in der elektronischen Auswerteschaltung aus der Intensität der reflektierten und/oder gestreuten Strahlung oder einer davon abhängigen Größe, eine Reibwert-Information der Fahrbahnoberfläche ermittelt wird
**dadurch gekennzeichnet, dass**
die Sensoranordnung mehrere Strahlungsemittereinheiten (1, 2, 3) aufweist, welche von einander um einen definierten Weg beabstandet, bezogen auf eine Parallele zur Fahrbahnoberfläche, im Fahrzeug angeordnet sind, wobei diese Strahlungsemittereinheiten (1, 2, 3) alle im Wesentlichen auf einen gemeinsamen Punkt oder auf ein gemeinsames Zielgebiet der Fahrbahnoberfläche gerichtet sind,
wobei
mittels einer geometrische Anordnung mehrerer Laser (1, 2, 3), als Strahlungsemittereinheiten, die Rückstreuung und/oder Reflektion unter verschiedenen Einstrahlwinkeln (α₁, α₂, α₃) erfasst wird.

11. Verfahren nach Anspruch 10, **dadurch gekennzeichnet, dass** die Intensitätswerte oder davon abhängige Größen, welche bei Erfassung der reflektierten und/oder gestreuten Strahlung durch die wenigstens eine Strahlungsemittereinheit (1, 2, 3) und/oder die eine oder mehreren zusätzlichen Sensoreinheiten bereitgestellt werden, in einer Klassifikatoreinheit der elektronischen Auswerteschaltung klassifiziert werden, wobei die Klassifikatoreinheit die Reibwert-Information, als Reibwert oder Reibwerttyp oder ein Reibwertintervall, berechnet und insbesondere wenigstens eine Güte-Information bereitstellt, welche eine Information über die Aussagekraft und/oder die Zuverlässigkeit der Reibwert-Information beinhaltet.

12. Verfahren nach Anspruch 11, **dadurch gekennzeichnet, dass** in der Klassifikatoreinheit der elektronischen Auswerteschaltung eine Frequenzanalyse der Strahlungserfassungs-Ausgangssignale der zumindest einen Strahlungsemittereinheit (1, 2, 3) und/oder der einen oder mehreren zusätzlichen Sensoreinheiten durchführt wird und nach der Frequenzanalyse insbesondere ein Energieverteilungsmuster bezogen auf einen definierten Frequenzbereich und/oder bezogen auf Energieniveaus in definierten Frequenzbändern erkannt und/oder erfasst wird und diesem Energieverteilungsmuster unter Berücksichtigung von Referenzkriterien und/oder Referenzenergieverteilungsmustern die Reibwert-Information zugeordnet wird.

## Claims

1. Sensor arrangement for capturing the coefficient of friction from a roadway surface, wherein the sensor arrangement is arranged on a motor vehicle and has at least one radiation emitter unit (1, 2, 3) and at least one electronic evaluation circuit, wherein the radiation emitter unit (1, 2, 3) emits electromagnetic radiation toward the roadway surface and the radiation is at least to some extent reflected and/or scattered at the roadway surface and the reflected and/or scattered radiation is at least to some extent captured in the radiation emitter unit (1, 2, 3) and/or in one or more additional sensor units, wherein
the electronic evaluation circuit is designed such that it ascertains a piece of coefficient-of-friction information for the roadway surface from the intensity of the reflected and/or scattered radiation or a variable which is dependent thereon, **characterized in that** the sensor arrangement has a plurality of radiation emitter units (1, 2, 3) which are arranged in the vehicle at a defined distance from one another, based on a parallel to the roadway surface, wherein said radiation emitter units (1, 2, 3) are all essentially directed at a common point or at a common target area on the roadway surface, wherein a geometric arrangement of a plurality of lasers (1, 2, 3), as radiation emitter units, is used to capture the backscatter and/or reflection at different angles of incidence (α₁, α₂, α₃).

2. Sensor arrangement according to Claim 1, **characterized in that** the electronic evaluation circuit is designed such that it classifies the intensity values or variables which are dependent thereon, which are provided by the at least one radiation emitter unit (1, 2, 3) and/or the one or more additional sensor units when the reflected and/or scattered radiation is captured, in a classifier unit, wherein the classifier unit calculates the coefficient-of-friction information, as a coefficient of friction or a coefficient-of-friction type or a coefficient-of-friction range, and provides at least one piece of quality information, in particular, which contains a piece of information about the validity and/or the reliability of the coefficient-of-friction information.

3. Sensor arrangement according to Claim 2, **characterized in that** the classifier unit of the electronic evaluation circuit is designed such that it performs frequency analysis of the radiation capture output signals for the at least one radiation emitter unit (1, 2, 3) and/or the one or more additional sensor units and, particularly after the frequency analysis, recognizes and/or captures an energy distribution pattern based on a defined frequency range and/or based on energy levels in defined frequency bands and associates the coefficient-of-friction information with said energy distribution pattern taking account of reference criteria and/or reference energy distribution patterns.

4. Sensor arrangement according to Claim 2 or 3, **characterized in that** the classifier unit of the electronic evaluation circuit is designed such that it determines the quality information on the basis of the variance and/or the standard deviation, particularly weighted using fuzzy logic, of the radiation capture output signals from the at least one radiation emitter unit (1, 2, 3) and/or the one or more additional sensor units.

5. Sensor arrangement according to at least one of Claims 2 to 4, **characterized in that** the classifier unit of the electronic evaluation circuit is designed such that it determines the quality information by taking account of further parameters for checking the plausibility of the coefficient-of-friction information, such as a piece of temperature information and/or a piece of rain sensor information and/or a piece of time/date information.

6. Sensor arrangement according to at least one of Claims 1 to 5, **characterized in that** the sensor arrangement has a plurality of radiation emitter units (1, 2, 3) integrated in a common cluster unit, wherein said radiation emitter units (1, 2, 3) are each directed at different points on the roadway surface.

7. Sensor arrangement according to at least one of Claims 1 to 6, **characterized in that** the one or more radiation emitter units (1, 2, 3) comprise a laser element which emits the radiation and particularly a photoelement which captures the reflected and/or scattered radiation.

8. Sensor arrangement according to Claim 7, **characterized in that** the photoelement is in the form of a photodiode and particularly the one or more radiation emitter units (1, 2, 3) or each radiation emitter unit (1, 2, 3) is in the form of a vertical cavity surface emitting laser with an integrated photodiode.

9. Sensor arrangement according to at least one of Claims 1 to 8, **characterized in that** the sensor arrangement is designed such that it additionally ascertains at least one speed for the motor vehicle relative to the roadway surface from the radiation reflected at the roadway surface, this being done using the same radiation emitter unit (1, 2, 3) and the same electronic evaluation circuit, in particular.

10. Method for classifying coefficients of friction in motor vehicles having a sensor arrangement, particularly a sensor arrangement according to at least one of Claims 1 to 9, wherein the sensor arrangement is arranged on a motor vehicle and comprises at least one radiation emitter unit (1, 2, 3) and at least one electronic evaluation circuit, wherein the radiation emitter unit (1, 2, 3) emits electromagnetic radiation toward the roadway surface and the radiation is at least to some extent reflected and/or scattered at the roadway surface and the reflected and/or scattered radiation is at least to some extent captured in the radiation emitter unit (1, 2, 3) and/or in one or more additional sensor units, according to which the electronic evaluation circuit ascertains a piece of coefficient-of-friction information for the roadway surface from the intensity of the reflected and/or scattered radiation or a variable which is dependent thereon, **characterized in that** the sensor arrangement has a plurality of radiation emitter units (1, 2, 3) which are arranged in the vehicle at a defined distance from one another, based on a parallel to the roadway surface, wherein said radiation emitter units (1, 2, 3) are all essentially directed at a common point or at a common target area on the roadway surface, wherein a geometric arrangement of a plurality of lasers (1, 2, 3), as radiation emitter units, is used to capture the backscatter and/or reflection at different angles of incidence (α₁, α₂, α₃).

11. Method according to Claim 10, **characterized in that** the intensity values or variables which are dependent thereon, which are provided by the at least one radiation emitter unit (1, 2, 3) and/or the one or more additional sensor units when the reflected and/or scattered radiation is captured, are classified in a classifier unit in the electronic evaluation circuit, wherein the classifier unit calculates the coefficient-of-friction information, as a coefficient of friction or a coefficient-of-friction type or a coefficient-of-friction range, and provides at least one piece of quality information, in particular, which contains a piece of information about the validity and/or the reliability of the coefficient-of-friction information.

12. Method according to Claim 11, **characterized in that** the classifier unit in the electronic evaluation circuit performs frequency analysis of the radiation capture output signals from the at least one radiation emitter unit (1, 2, 3) and/or the one or more additional sensor units and, following the frequency analysis, recognizes and/or captures particularly an energy distribution pattern based on a defined frequency range and/or based on energy levels in defined frequency bands and associates the coefficient-of-friction information with said energy distribution pattern taking account of reference criteria and/or reference energy distribution patterns.

## Revendications

1. Système de capteur destiné à détecter le coefficient de frottement d'une surface routière, dans lequel le système de capteur est disposé sur un véhicule automobile et comprend au moins une unité émettrice de rayonnement (1, 2, 3) et au moins un circuit d'évaluation électronique, dans lequel l'unité émettrice de rayonnement (1, 2, 3) émet un rayonnement électromagnétique vers la surface routière et le rayonnement est au moins partiellement réfléchi et/ou diffusé par la surface routière et le rayonnement réfléchi et/ou diffusé est au moins partiellement détecté dans l'unité émettrice de rayonnement (1, 2, 3) et/ou dans une ou plusieurs unités à capteurs supplémentaires, dans lequel
le circuit d'évaluation électronique est conçu pour déterminer à partir de l'intensité du rayonnement réfléchi et/ou diffusé ou d'une grandeur qui en dépend, une information concernant le coefficient de frottement de la surface routière, **caractérisé en ce que** le système de capteur comporte une pluralité d'unités émettrices de rayonnement (1, 2, 3) qui sont disposées dans le véhicule de manière à être espacées les unes des autres d'un trajet défini par rapport à une parallèle à la surface routière, dans lequel lesdites unités émettrices de rayonnement (1, 2, 3) sont toutes orientées sensiblement vers un point commun ou vers un domaine cible commun de la surface routière, dans lequel
la rétrodiffusion et/ou la réflexion est détectée sous divers angles d'incidence (α₁, α₂, α₃) au moyen d'un agencement géométrique de plusieurs lasers (1, 2, 3), en tant qu'unités émettrices de rayonnement.

2. Système de capteur selon la revendication 1, **caractérisé en ce que** le circuit d'évaluation électronique est conçu pour classer, dans une unité de classification, les valeurs d'intensité ou des grandeurs qui en dépendent, qui sont fournies lors de la détection du rayonnement réfléchi et/ou diffusé par l'au moins une unité émettrice de rayonnement (1, 2, 3) et/ou lesdites une ou plusieurs unités à capteurs supplémentaires, dans lequel l'unité de classification calcule l'information concernant le coefficient de frottement en tant que coefficient de frottement ou que type de coefficient de frottement ou qu'intervalle de coefficient de frottement et fournit notamment au moins une information de qualité qui comporte une information concernant le caractère significatif et/ou la fiabilité de l'information concernant le coefficient de frottement.

3. Système de capteur selon la revendication 2, **caractérisé en ce que** l'unité de classification du circuit d'évaluation électronique est conçu pour effectuer une analyse de fréquence des signaux de sortie de détection de rayonnement de l'au moins une unité émettrice de rayonnement (1, 2, 3) et/ou desdites une ou plusieurs unités à capteurs supplémentaires et identifie et/ou détecte notamment après l'analyse de fréquence un modèle de distribution d'énergie par rapport à un domaine de fréquence défini et/ou par rapport à un niveau d'énergie dans des bandes de fréquences définies et affecte l'information concernant le coefficient de frottement audit modèle de distribution d'énergie en tenant compte de critères de référence et/ou de modèles de distribution d'énergie de référence.

4. Système de capteur selon la revendication 2 ou 3, **caractérisé en ce que** l'unité de classification du circuit d'évaluation électronique est conçu pour déterminer l'information de qualité en fonction de la variance et/ou de l'écart type des signaux de sortie de détection de rayonnement, notamment pondérés au moyen d'une logique floue, de ladite au moins une unité émettrice de rayonnement (1, 2, 3) et/ou desdites une ou plusieurs unités à capteurs supplémentaires.

5. Système de capteur selon au moins l'une des revendications 2 à 4, **caractérisé en ce que** l'unité de classification du circuit d'évaluation électronique est conçue pour prendre en compte, afin de déterminer l'information de qualité, d'autres paramètres destinés à rendre plausible l'information concernant le coefficient de frottement, comme par exemple une information de température et/ou une information de capteur de pluie et/ou une information de temps/date.

6. Système de capteur selon au moins l'une des revendications 1 à 5, **caractérisé en ce que** le système de capteur comporte plusieurs unités émettrices de rayonnement (1, 2, 3) dans une unité de groupement commune, dans lequel lesdites unités émettrices de rayonnement (1, 2, 3) sont respectivement orientées vers divers points de la surface routière.

7. Système de capteur selon au moins l'une des revendications 1 à 6, **caractérisé en ce que** lesdites une ou plusieurs unités émettrices de rayonnement (1, 2, 3) comprennent un élément à laser qui émet le rayonnement et plus particulièrement, un élément photovoltaïque qui détecte le rayonnement réfléchi et/ou diffusé.

8. Système de capteur selon la revendication 7, **caractérisé en ce que** l'élément photovoltaïque est réalisé sous la forme d'une photodiode et en particulier, **en ce que** lesdites une ou plusieurs unités émettrices de rayonnement (1, 2, 3) ou chaque unité émettrice de rayonnement (1, 2, 3) est réalisée sous la forme d'un laser à émission de surface à cavité verticale ou "vertical cavity surface emitting laser" comportant des photodiodes intégrées.

9. Système de capteur selon au moins l'une des revendications 1 à 8, **caractérisé en ce que** le système de capteurs est réalisé de manière à déterminer en outre à partir du rayonnement réfléchi par la surface routière au moins une vitesse du véhicule automobile par rapport à la surface routière, et **en ce que**, à cet effet, la même unité émettrice de rayonnement (1, 2, 3) et le même circuit d'évaluation électronique sont en particulier utilisés.

10. Procédé de classification du coefficient de frottement dans des véhicules automobile comportant un système de capteur, notamment un système de capteur selon au moins l'une des revendications 1 à 9, dans lequel le système de capteur est disposé sur un véhicule automobile et comprend au moins une unité émettrice de rayonnement (1, 2, 3) et au moins un circuit d'évaluation électronique, dans lequel l'unité émettrice de rayonnement (1, 2, 3) émet un rayonnement électromagnétique vers la surface routière et le rayonnement est au moins partiellement réfléchi et/ou diffusé par la surface routière et le rayonnement réfléchi et/ou diffusé est au moins partiellement détecté dans l'unité émettrice de rayonnement (1, 2, 3), et/ou dans une ou plusieurs unités de détection supplémentaires, puis
une information concernant le coefficient de frottement de la surface routière est déterminée dans le circuit d'évaluation électronique à partir de l'intensité du rayonnement réfléchi et/ou diffusé ou d'une grandeur qui en dépend,
**caractérisé en ce que**
le système de capteur comporte une pluralité d'unités émettrices de rayonnement (1, 2, 3) qui sont disposées dans le véhicule de manière à être espacées les unes des autres autour d'un trajet défini par rapport à une parallèle à la surface routière, dans lequel les unités émettrices de rayonnement (1, 2, 3) sont toutes orientées sensiblement vers un point commun ou vers un domaine cible commun de la surface routière,
dans lequel la rétrodiffusion et/ou la réflexion est détectée sous divers angles d'incidence (α₁, α₂, α₃) au moyen d'un agencement géométrique de plusieurs lasers (1, 2, 3), en tant qu'unités émettrices de rayonnement.

11. Procédé selon la revendication 10, **caractérisé en ce que** les valeurs d'intensité ou des grandeurs qui en dépendent, qui sont fournies lors de la détection du rayonnement réfléchi et/ou diffusion par au moins une unité émettrice de rayonnement (1, 2, 3) et/ou par lesdites une ou plusieurs unités de détection supplémentaires, sont classées dans une unité de classification du circuit d'évaluation électronique, dans lequel l'unité de classification calcule l'information concernant le coefficient de frottement en tant que coefficient de frottement ou que type de coefficient de frottement ou qu'intervalle de coefficient de frottement, et fournit en particulier au moins une information de qualité qui comporte une information concernant le caractère significatif et/ou la fiabilité de l'information concernant le coefficient de frottement.

12. Procédé selon la revendication 11, **caractérisé en ce qu'**une analyse de fréquence des signaux de sortie de détection de rayonnement de l'au moins une unité émettrice de rayonnement (1, 2, 3) et/ou desdites une ou plusieurs unités de détection supplémentaires est effectuée dans l'unité de classification du circuit d'évaluation électronique et **en ce qu'**après l'analyse de fréquence, un modèle de distribution d'énergie est identifié et/ou détecté en particulier par rapport à un domaine de fréquences défini et/ou par rapport à un niveau d'énergie dans des bandes de fréquences définies et **en ce que** l'information concernant le coefficient de frottement est associé audit modèle de distribution d'énergie en tenant compte de critères de référence et/ou de modèles de distribution d'énergie de référence.
